# EUROPEAN PATENT APPLICATION

(11) **EP 3 637 348 A1**
(43) Date of publication of application: **15.04.2020**
(21) Application number: 18814060.2
(22) Date of filing: 22.03.2018
(51) Int. Cl.: G06Q 30/00

(54) **SYSTEM FOR DETECTING MATING BY MEANS OF INTRABODY COMMUNICATION (IBC)**

(30) Priority: 07.06.2017 CO 17005655
(71) Applicant: Logsent S.A.S., Bogotá (CO)
(72) Inventor: LOPEZ GALARZA, Edgar Hernando, Bogot (CO); LOPEZ GOMEZ, Jhon Fredy, Bogot (CO)
(74) Representative: Carvajal y Urquijo, Isabel
(86) International application number: PCT/IB2018/051959
(87) International publication number: WO 2018/224895

(57) **Abstract**

The present invention refers to a system for detecting mount events in animals, which uses the technique of intrabody (IBC) signal transmission. The system is comprised by a fundamental unir disponsed in each animal, which comprises an electronic box (13) fastened to the neck of each animal through a collar (12) and mainly formed by four modules: 1) processor, 2) sensor; 3) IBC (Intra-Body Communication) transceiver, 4) RF (radiofrequency) transceiver. The process for detecting the mount event with the system disclosed herein is also provided.

## Description

### FIELD OF THE INVENTION

The present invention has application in the field of the agricultural and cattle industry, more particularly in the field related to the development of equipment designed to detect the mount, and therefore the detection of heat (sexual).

### BACKGROUND OF THE INVENTION

The efficiency in the reproduction is a very important aspect in the activities oriented in domestic animal husbandry such as cattle. One way to maximize the productive life of the cow is to establish some proper intervals between births by using artificial insemination or natural mount. Due to this, the detection of heat is fundamental to carry out a good reproductive management in the milk exploitation. In these cases, the responsible of the exploitation can decide between using artificial insemination or natural mount (*Deptolnfocarne.com, 2015*).

The insemination or natural mount lead to the pregnancy only if the spermatozoid is in the right place at the right time. A commonly used technique to choose the best moment to perform the artificial insemination is the morning/afternoon rule which consists in inseminating the same afternoon those cows observed in heat in the morning, and to inseminate the next morning the cows observed in heat during the afternoon. In the case of natural mount, the cow and the bull can mate after the cow accepts the mount until the cow refuses to be mounted.

The moment of the female cycle in which the artificial insemination is performed is of particular transcendence since, both the egg and the spermatozoids have a limited life in the reproducing tract of the cow. For an effective management of the artificial insemination, the most important requirement is an effective and precise detection of heat (*Dick, 2002*). The mistakes in detection represent a delay in the conception and a decrease in the insemination percentages. The signs of heat can be classified in primary: mount acceptance; and secondary: discharge of clear mucus, pressing the chin when mounting other cows, anxiety, swelling, redness of the vulva, hair loss and dirt stains in the hip, blood stains in the tail or vulva, and decrease of intake and milk production (*Diskin 2008*).

However, the factors related to the cow and the management thereof are diverse, which significantly contribute to a low and variable expression of the external signs of heat and finally, to a low detection of heat. One of the important factors is the type of facilities and cow housings, whether it is stables, fields, etc., which will allow the rancher to perform to a greater or lesser extent the heat detection. It must also be taken into account that certain climate conditions such as high temperatures, humidity, wind, rain, snow, excessive confinement, etc., can make the cows to show problems to walk (falls, hood pains, etc.) and to reduce, therefore, the heat expression (*Deptolnfocarne.com, 2015*). Likewise, it must be taken into account that, in large groups, there may be more than one cow in heat at the same time and, therefore, the mount activity also increases importantly.

The best and most reliable sign that a cow is in heat is the acceptance to be mounted by other cows or by a bull, in most of the cattle ranches, specially those stalled, there are no bulls in the same place as the cows, therefore, the mount activity is seen exclusively between females.

The heat detection, requires a visual observation of determined behaviors of the cows during this period, since the cattle behavior can change from the beginning to the end of the period. Due to the difficulties shown in the detection of the beginning of the estrus cycle, it is necessary to implement technological aids so as to improve the heat detection.

Some electronic systems used in the prior art capable of detecting the mount, are based on devices supported in the base of the tail of the females through patches and adhesives which usually tend to accidentally detach, affecting the usability and accuracy, moreover they can activate by events different to the mount, producing thereby false alarms.

Commercial apparatuses use a technology for detecting the heat based on radio micro-transmitters which incorporate a pressure switch adhered on the base of the animal tail. The transmitters continuously monitor the mount activity of the cattle and transmit the acquired data to a computer, in which an advanced software algorithm analyzes the mount profile of each animal.

Document No. US7083575 features an electronic device for detecting the beginning of the heat, this must be fastened in the area of the base of tail of each female, the device allows to determine the optimal moment for insemination or for natural mount to occur, based on the mount activity. Document No. WO0215792 provides an electronic system for precisely detecting the heat, which includes a transmitting unit and a plurality of heat detecting units which signs are wirelessly transmitted in response to the signals from the switches located on the base of the tail of each cow which are activated due to the mount of the animals.

Document No. US4895165 refers to an electronic detector of heat which is placed in the back part of the cow and comprises a counter for saving and deploying the number of mounts by other cows. The impact of a cow when mounts the other, closes the switch located on the animal and it makes the counter to increase. The number of mounts determines the beginning of the estrus cycle.

All of these are apparatuses being located on the base of the tail of the animal in heat which can be mounted and these detect the mount through the pressure exerted by a second animal mounting the animal in heat. Due to the location on the animal, it results impossible to fasten these devices with belt or buckle systems, whereby these tend to be fastened through adhesives which require constant labor and can easily fall.

Document US5111799 refers to a similar apparatus for detecting the mount which specially adapted for surgical implantation in the back quarters of the cattle and comprises an autonomous source of energy, a strength sensor, a controller, a transmitter and an antenna. The surgical implantation results very traumatic and complex in each animal, and also makes it difficult or practically impossible the maintenance of the devices.

Another different type of devices to detect the mount, which identifies the animals in heat are those based on techniques of radiofrequency identification (RFID). One example of such systems is the one exposed in the patent document No. CO2015234903, which uses RFID chips being injectable or fastened in the base of the tail of the females and a RFID chip reader fastened to the chest of the probing bull or androgenized cow through harness.

Colombian patent No. CO2012167964 teaches a cattle monitoring system through a telemetric device comprising a master device and 74 slave devices. This system contemplates the use of three electronic units consisting of a RFID chip located on the tale of a first female animal, a harness with RFID receptor located on a second animal and called slave device, and a master device retransmitting the RF signal and being located on a third animal.

This kind of devices require infertile animals to perform the mount, such as androgenized females or sterilized males, these animals are not usually accepted in many types of cattle exploitation for being considered dangerous and unproductive, and to discard these animals in these systems would imply the installation of a harness for each cow, which results non-practical and uncomfortable. Moreover, injecting chips in animals of human consumption can be a regulated or prohibited practice, and the piercing of the animal skin in the area of the base of the tail with fastening rings or hooks is susceptible to infections and complications.

Other mount detection techniques based on radiofrequency identification RFID systems use RFID readers on the neck of an androgenized male or female animal and a RFID chip on the ear of each female. This is the case of the system for breeding and management of cattle being reported in patent document No. US8066179. The system is specified for use in a herd where each female animal carries a RFID identification. The system comprises a system for managing the herd; and one or more activity monitors to be carried by each male animal, where each monitor is capable of detecting when the male animal is mounting a female animal, based on the body position of the male animal, from reading the identification data of the RFID label of the mounted female animal, and from generating data of the reproduction activity, including the identification data of the mounted female animal, mounting data in male animals and time of each mount for the output to the herd management system. The system for breeding and managing of this document, comprises a RFID chip reader on the neck of each male animal, which must read the identification of the RFID chips on the ear of each female during the mount, which requires that the reading distance between the RFID reader and the RFID chip is much greater than in the systems where the chip reader is located on the chest, this introduces the additional inconvenient of errors in the identification of the animal being mounted, since the reader can read the chip of an animal nearby which is not being mounted, this closeness situation of the animals is very frequent even more in stabled ranches where the space is reduced.

In a similar manner and with the same inconvenient, there is the device for automatic detection of animals mating, taught by patent document No. FR2863823, the apparatus described in this patent contemplates the use of two units of devices which are carried by the two animals involved in the mating, the female in heat being the one carrying the RIF identificatory, called herein transponder, and the second animal carries a harness with a RFID reader. The information is stored in the RAM memory and is sent to an external base station or is downloaded to a portable computer.

Another further inconvenient in all the above mentioned systems based on RFID readers is the activation mechanism for the RFID reader, which must be initiated when the animal using the collar or harness is jumping over the animal in heat. The techniques known in the state of the art refer to the detection of the mount moment through accelerometers and gyroscopes, which results inexact since it raises the need of calibrating the system in a highly sensitive mode to avoid real events from being detected. But the high sensitivity generate false alarms by natural movements of the animal with accelerations and angles similar to those during the mount but which are generated when the animal is eating, scratching itself, interacting with other animals, or simply moving sharply the head, therefore an accelerometer-gyroscope system for detecting the jump and mount of an animal over another, calibrated in a highly sensitive manner, not only would help to detect all the real mounts but also would generate many false alarms which originate to indicate cows in heat which are really not. On the other hand, calibrating the system with less sensitivity would avoid the false alarms, but would also refrain from detecting real mounts. One solution to this inconvenient is to use an additional height sensor which validates the possible mount of an animal over other, based on the height difference presented by the mounting animal when is located on the animal in heat.

Another recurrent problem in the systems for detecting the heat based on wireless technologies through air such as RFID, is the interference or multiple readings that can be generated when two or more chips are within the reading range of the RFID reader, which happens frequently during the mount, since besides of the animal being mounted and the one mounting there can be other animals nearby, whereby the RFID chip reader could register cows in heat which are really not.

One possible solution to this communication problem between the animal mounting and the animal being mounted, is in the implementation of new short range communication technologies which are not indiscriminately broadcasted in the air, among which the techniques of intrabody communications (IBC) can be found. This kind of technology uses the human body (or the animal body) as a medium for transmitting electric signals among the devices placed over the body surface or close to this. This technology uses signals which are coupled through small electrodes to the body, favoring the decrease of the consumption and the minimization of interferences with other devices (Callejon, 2016).

About this, several documents can be found such as No. US2011/0227856 which discloses a system for secure identification in which a user obtains access through an identification device or identification card or label (51) carried on the body, coupled to the body (BCC) by communication technique to create some sort of aura around the user, wherein the functioning of the system consists in that when a person touches the identification apparatus or system, when he/she contacts it or near it, the BCC transmitter or transceiver of the portable apparatus (e.g., an identification card or label) transmits the user identification (ID) through the BCC channel generated for the BCC receiver or transceiver of the user interface in the identification apparatus or system. The Id received can be compared to those stored in a safety database and if the person is authorized to use the system, he/she can automatically access and rapidly login without intentionally entering any password. This system is conceived for applications of people identification, however, it does not refer to applications in animals much less in use for detecting heat.

Patent document No. US2010/0288208 refers to a collar (1000) and several possible embodiments of the collar, wherein said collar is used for animal control, in which it is desirable to carry a plurality of sensors on the animal for control of several aspects of its behavior, which provides the stockbreeder completed data which help managing the animal's care. Similarly, the document recites to data communication and gathering from the device, such that the system of circuits inside the housings of the collars, includes a plurality of sensors for controlling the behavioral characteristics, such as standing up, walking, laying down, heat, etc. The collar communicates wirelessly with a network of sensors housed in the second, third and fifth housings and also comprises remote sensors located on and around the animal. In this case the communication between collars is not contemplated, nor does it mention IBC or other forms requiring proximity between two individuals, but instead it is carried out directly from the collar to the base station by wireless means. In this way, the interaction between two collars for reading the state of a sensor, in this case in the event of a mating, is not apparent.

On the other hand, patent document No. US9011327 provides a device placeable on or near a human or animal body, in which the device comprises a detection unit configured for capacitively detecting a physiological signal from the human or animal body and capacitively communicate a communication signal from the coupled body to a body from the area network (BAN). The device can be used to detect and measure a physiological signal and communicate a communication signal to the coupled body. In other words, the patent provides a capacitive detection device with communication capabilities from the coupled body, where the same couplers can simultaneously be used to detect, transmit and receive. Therefore, detection and communication can be carried out at the same time by the same detection unit. The device potentially can be of ultra-low power and low cost, since it does not require an additional antenna and RF unit. The detection unit allows recovery of the data transmitted from another device, for example, physiological data detected by the other device. Therefore, the data transmitted by another device can be recovered, while at the same time having the local collection of physiological data by means of the detecting unit. The device can comprise a communication unit configured to emit a communication signal to a device separate from the human or animal body. The communication unit can be used to deliver data such as, for example, raw or processed physiological data detected by the device or received in this way to a device separate from the human or animal body. The document does not specify the type of sensor the unit may have. Further, nowhere does it mention that the device can be configured to detect mating events.

In the state of the art there are also collars, straps and earrings such as those mentioned in patent No. US7878149, which detect heat by means of the secondary signal which is the increase of locomotion, but do not achieve the precision obtained by detecting the primary sign which is the mating and cannot know the time of the first mating or the successive matings or their frequency to program with a higher success rate the hour for insemination. Another difficulty presented is the detection of false alarms due to increases in the animal's locomotion caused by factors other than heat.

Wireless communication by means of the air between the devices of the animal doing the mounting and the animal being mounted is little reliable to determine which exactly is the animal being mounted, since bovines are gregarious animals that remain grouped and close to each other even when one of the is in heat, hence the distance and orientation between an electronic device (collar, bracelet, earring or other) of the animal doing the mounting and the animal being mounted can be the same as the distance and orientation between the animal doing the mounting and a third animal not being mounted but close to the other two, resulting in serious precision errors or recurring false alarms.

The systems for detecting heat comprise devices located at the base of the tail and detecting the mounting by means of the pressure exerted by the animal doing the mounting on the device adhered to the animal being mounted, are often inconvenient since, due to its location on the animal it is impossible to fasten these devices with belt and buckle systems, because of which they are usually secured by means of adhesives that require constant work and fall easily. In any situation it is more practical, safe and reliable, to fasten the device by means belts and buckles on the neck or legs of the animal than to fasten it to other parts of the body, but on the other hand it is more exact and precise to detect bovine heat by means of the primary sign (mounting) than by means of detection of secondary signs (increase in locomotion), which are easily detected by means of devices fastened with belts and buckles to the animal's neck or legs.

Due to all of the above, there is evidence of a need for a system capable of detecting mounting without the difficulties of securing it by means of glued patches or the condition of using a testing bull or injected elements, which involve an additional variable and/or technique to detect when an animal is mounting another, based on devices that are the same amongst individuals, easy to install, hopefully located on the neck, ad with low power usage that can be supplied by batteries. In other words, a system presenting greater precision, smaller amount of false alarms and greater ease of use.

### BRIEF DESCRIPTION OF THE INVENTION

with the goal of solving this problem, it is highly important to know the primary sign for heat, known to be the acceptance of mounting. This determines the beginning of heat and it is used to foresee the best hour for carrying out insemination with greater chances of success.

The present invention teaches a system for detecting mounting based on the interaction between two animals by means of a physical communication medium, in this case the body of the animal being mounted is used as means for transmitting signals by means of an intra body communications technique known as IBS (*Intra Body Communications*). They differ from the systems described in the state of the art, where the interaction between the two animals taking part on the mounting is provided by means of a wireless communication through air.

The interaction between the animal doing the mounting and the one being mounted by means of intra body communications (IBC) solves all these difficulties, since IBC communication happens in a secure and exclusive manner through the animal being mounted and not through the air. Additionally, in order to detect that an animal is starting the mounting sequence on another animal, measurements indicting not only acceleration and twist (8) are used, but also height variation by means of an atmospheric pressure sensor (7). The use of this variable and its processing within the algorithm allows for greater precision to determine the real moment in which one animal is mounting another, and, therefore, greater precision for heat detection, it also manages to avoid activation due to false alarms that besides generating erroneous data would represent a greater energy consumption during times where a heat detection system would be unfeasible or little practical.

To detect when an animal is mounting another, the invention provides a height sensor (for example an atmospheric pressure sensor), nonetheless, distance, ultrasound, infrared or presence sensors can be used. Similarly, algorithms are provided to detect the height difference between the animal doing the mounting and the one being mounted, as well as the difference and relationship between the height of the same animal doing the mounting, before, during and after the mounting activity.

The developed system is comprised by a fundamental unit on each animal comprised by an electronic box (13) attached to the neck of each animal by means of a collar (12) and buckles and comprising mainly a processor (1), a sensing module (2), and IBC transceiver (3) and the RF receiver (4). The same collar type (12) is used by the animal in heat being mounted and by the animal doing the mounting. Prior to the effective mounting of an animal on another a sequence of movements is produced which are detected and characterized by the sensing module (2) of the animal doing the mounting, first there is a lowering and rising of the head, then a sudden acceleration during the mounting and finally an ascending difference with respect to the ground. These events are detected through an accelerometer (8) and atmospheric pressure sensor (7), present in the sensor module (2) of the collar.

Another embodiment of the present invention is the process of detecting the mounting by means of the detection system, disclosed herein. The detection of an effective mounting determines the immediate beginning of the transmission of an electrical signal by means of inter body IBC initiated from the IBC transceiver (3) of the animal doing the mounting (23) and transmitted to the collar of the animal being mounted (24). Said electric signal travels from the collar of the animal doing the mounting by being in contact with or close to the back of the animal being mounted and crosses its corporal tissues until it is received by the IBC transceiver module (3) of the collar of the animal being mounted (24). The RSSI (Received Signal Strength Indicator) intensity and duration of the received signal are analyzed by the processing module (1), in case of surpassing the set thresholds it is regarded that an effective mount has been produced to a female in heat.

The exact time, animal identification, signal intensity and its duration are data stored in the processing module (1) and also transmitted by means of the RF transceiver (4) on the electronic collar towards another RF transceiver (4) linked to a computer terminal (16) and or mobile terminal (17) which serve as means of consult and alert regarding the animal's heat.

The IBC communications system implemented in the collar of each cow allows for additional functionalities such as identification of each cow, gate activation, automatic feeders, historic information exchange for each animal and other possibilities.

One of the functional features of the present invention, is that in order for the system to work it is not necessary for a male to be present in order to detect a mount. Also, there are no external chips embedded or inserted in each of the females. In this technology the same collar (12) is placed on all cows.

According to what has been exposed above, it can be said that the main differences between the technology of the present invention and the devices in the state of the art, are the following:
- None of the previous technologies uses the inter body communications system IBC.
- The use chips or patches an order to detect a mounting on females, not collars with an IBC system and a height sensor, such as an atmospheric pressure sensor.
- The sensors used in the state of the art are of the following type: locomotion sensor, or switch (push) sensor, but are not atmospheric pressure sensor, accelerometer and IBC signal sensor.

In order to complete the description and with the goal of helping to better understand the characteristics of the invention, enclosed to the present specification are a series of illustrative figures where it would be possible to easily comprehend the innovations and advantages of the mounting detection system developed.

### FIGURE LISTING

The relevant aspects and the advantages of the present invention will be better understood with regards to the following figures:
**Figure 1****.** Electric schematic of the fundamental unit arranged on the collar of each unit.
**Figure 2****.** Physical placement of the detection system developed.
**Figure 3****.** General schematic of the functioning of the detection system.
**Figure 4****.** Diagram of operation for interrupting the standby mode.
**Figure 5****.** Schematic of the process for interrupting the standby mode by IBC.
**Figure 6****.** Schematic of the process for interrupting the standby mode with a timer.
**Figure 7****.** Schematic of the process for interrupting the standby mode by a sensor.

### LIST OF TAGS

(1) Processing module
(2) Sensor module
(3) IBC transceiver
(4) RF transceiver
(5) Clock
(6) Inner memory
(7) Atmospheric pressure sensor
(8) Acceleration sensor
(9) Fixed electrode
(10) Hanging electrode
(11) RF antenna
(12) Collar and buckles
(13) Electronic box
(14) Link door
(15) Data connection to the internet
(16) Computer terminals
(17) Smartphone
(18) IBC signal
(19) Wireless link
(20) Wired and/or wireless links
(21) Wired and/or wireless links
(22) Wired or wireless interface
(23) Electronic unit (collar) of the animal doing the mounting
(24) Electronic unit (collar) of the animal being mounted
(25) Information sharing via RF communication
(26) Standby mode
(27) Standby mode interruption
(28) Interruption by IBC
(29) Interruption by timer
(30) Interruption by sensor
(31) Evaluate if the current state of the cow is laying down
(32) Current state is different to laying down
(33) RF transceiver activation
(34) Obtaining ID identification
(35) Comparing the height of the cow doing the mounting with the cow being mounted
(36) Real mounting event
(37) Data storage
(38) Return to standby mode
(39) Taking atmospheric pressure and acceleration measurements
(40) Updating and calculating measurements for: height and atmospheric pressure, resting time, standing or walking time, feeding time, position of the head and current state.
(41) Return to standby mode
(42) Initial time Zero
(43) Assess if there is an increase higher to the established threshold on the height of the animal
(44) Increase timer
(45) Assess if the time is less than 3 seconds
(46) Activate the emission of the IBC signal
(47) Assess if the height is still the initial height
(48) Wait for a time
(49) Assess if the time is less than 10 seconds
(50) Deactivate the emission of the IBC signal
(51) Activate the RF emitter
(52) Connect via RF with nearby animals
(53) Identify the module with the highest RSSI in the IBC signal and connect to it via RF
(54) Return to standby mode

### DETAILED DESCRIPTION OF THE INVENTION

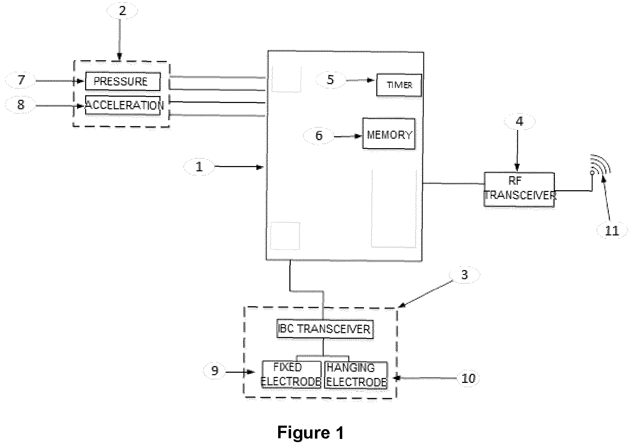

The present invention refers to an electronic system for detecting mounting events in animals, which works by means of transmitting an intra body communications signal (IBC). The system consists of a fundamental unit on each animal characterized in that it comprises an electronic box attached to the neck of each animal by means of a collar and buckles, comprised mainly of for modules such as those shown in figure 1; Processor (1), sensor (2), IBC transceiver (3) and, RF transceiver (4).

The processor (1) comprises a series of input and output ports for communicating with the peripheral devices and remaining modules of the system. Similarly, it comprises a clock (5) and an inner memory (6) for storing instructions and data obtained. The sensor module (2) consists of at least one atmospheric pressure sensor (7) and an acceleration sensor (8), both sensors communicating with the processor by their ports.

The IBC transceiver (3) is comprised of a fixed electrode (9) located in the collar in contact with the body of the animal, and a hanging electrode (10) located in the collar thereof. While the data gathered are sent by means of an RF transceiver (4) through and RF antenna (11).

The detection on the sensor module (2) of a mounting and increase on the corresponding height of an animal mounting another, sets the beginning of the transmission of an electrical signal by means of an IBC communication through the body, started from the IBC transceiver module's (3) of the collar of the animal doing the mounting and transmitted to the collar of the animal being mounted, said electrical signal travels from the collar of the animal doing the mounting through the bodily tissues until it is received by the IBC transceiver in the collar of the animal being mounted. The hour, animal's identification, signal intensity and duration are the data stored in the memory (6) of the processor (1) and transmitted via the RF transceiver module (4) on the electronic collar to another RF transceiver linked to a computer terminal and/or mobile terminal which work as a means for processing the information, query and alert on the heat of the animals. The data stored in the memory (6) are used for retransmission in case of a failure, for generating analysis and historic with the same processor (1), and to be sent in packages of data revealing the mountings and activity of the animal during the previous weeks or months.

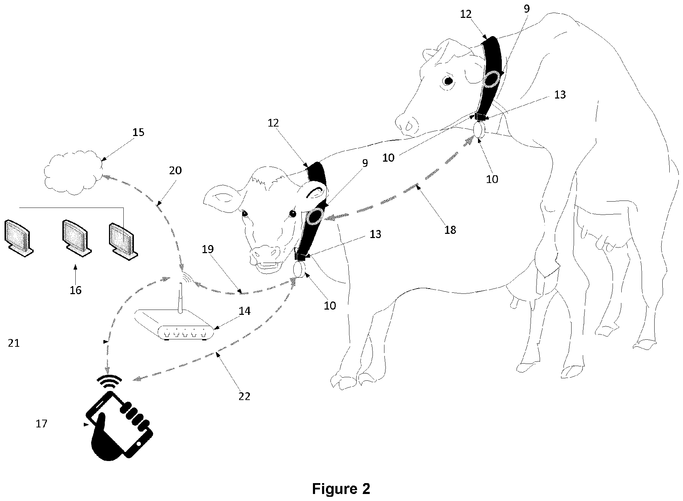

Figure 2 shows a general schematic of the developed system. This comprises equipment for interacting with the users such as computer terminals (16) and mobile equipment such as smartphones (17), a link door for receiving ad transmitting information, and an equipment or developed for detecting mounting of an animal on another. The equipment developed for detecting mounting consists on an electronic system mounted on a collar (12) and buckles arranged on each cow.

This is a resistant belt which is adjusted by means of a buckle to the size of each animal's neck. Each collar (12) comprises an electronic box (13), installed on the collar, which contains the electronic modules and is electrically interconnected, with the fixed electrode (9) and the hanging electrode (10), the fixed electrode (9) can be housed inside this box or be a part of it. The fixed electrode (9) is a metallic piece secured in such a way that it remains in firm contact with the neck of the animal using it, its function is to receive the electrical signals induced through the body of the animal (18), which travel from the hanging electrode (10) of the collar of the animal doing the mounting. A hanging electrode (10) is a metallic piece joined to the lower part of the collar in such a way that it remains hanging from the neck of the animal using and in direct contact or close to the back of the second animal when the mounting is produced. Its function is to transmit the electric signals induced through the body of the animal (18), which travel to the fixed electrode (9) of the collar of the animal being mounted.

The mounting and animal state events are transmitted wirelessly towards a link gate (14). This is a communications equipment that is useful for transmitting information between the electronic collars and the computer terminals, said communication is carried out by means of some wireless link (19) such as radiofrequency, infrared, or electrical signals through the body of the animals. The communication between the link gate (14) and the computer terminals (16) is carried out by means of wired and/or wireless links (20), even towards the remote equipment by means of some data connection to the internet (15). The computer terminals correspond to a terminal equipment such as a smartphone (17), PC (16) or server, which communicates with the link gate (14) by means of a wired and/or wireless link (21) and/or directly with the electronic collars by means of a compatible wireless or wired interface (22), said terminal stores, processes and presents the information and alerts to the system users.

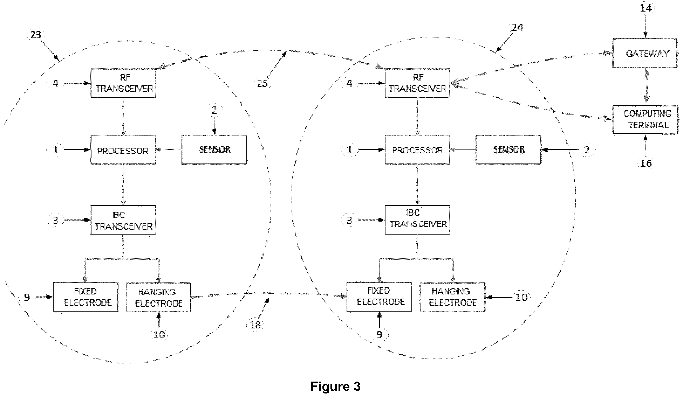

In figure 3 it is shown a schematic of the systems functioning. As it can be seen, the system comprises two identical electronic units located on each animal, one unit (23) corresponds to the collar placed on the animal doing the mounting, whereas unit (24) refers to the collar of the animal being mounted. The processor module (1) by means of a 3D accelerometer (8) and a height and atmospheric pressure sensor (7) of the sensor module (2) determines the current mode of the activity of the animal, distinguishing at least the modes corresponding to standing, feeding, laying down, walking and raised head, these calculations are initiated by timer interruption (29) every certain period of time, for example, with a priority of less than a second to several minutes. In a preferred way, said calculations can be made every half a second. The calculations to determine whether a cow is mounting another start at any instant from a sudden acceleration originating a sensor interruption (30), nonetheless said interruption is only possible if the state of the cow is standing up or walking, and is discarded if the state thereof is lying down or feeding, in this way it is prevented that sudden movements and height changes when the cow is feeding or standing up can be confused with mounts on anther animal.

All the calculated information is stored, processed and eventually retransmitted towards the link gate (14) and the computer terminals (16), with it changes in the behavior of the animal, present when the animals are in heat or in animals with health problems, are identified and mainly the movements of one animal mounting another animal in heat are identified.

In a similar way the processor module (1) by means of an atmospheric pressure sensor (7) of the sensor module (2) calculates the atmospheric pressure and height, and recalculates daily the average height of the animal standing up or walking. The calculation of the height can also be carried out by means of using ultrasound, infrared, distance or presence sensors.

The processor module (1) is all the time attentive to detecting a mounting of an animal on another animal by means of the sensor module (2). It is also permanently attentive to the reception of a signal by means of the IBS transceiver (3); in other words, it is always attentive to detecting a mounting on another animal or detecting that it was mounted by another animal.

The mounting on another animal is characterized by the sequence of the following events: raised head identified by the accelerometer (8) or gyroscope, sudden acceleration identified by the accelerometer (8), and an increase in the height higher than the threshold identified by the atmospheric pressure sensor (7).

When the mounting event is identified, the IBC communication (18) is initiated which consists of an electric signal generated at the processor module 81) and preferably amplified by a power driver and a resonating circuit LC of the IBC transceiver module (3), said amplified signal is transmitted via the hanging electrode (10) in contact with or close to the back of the other animal being mounted (24), the signal travels through the tissues of the animal being mounted (24) until they arrive at the neck thereof where the fixed electrode (9) can be found which receives and processes it, preferably by means of a low power AFE (Analog Front End) integrated circuit, giving origin to an interruption by IBC (28) on the processor 81) of the cow being mounted (24), as long as the state thereof is not lying down, the signal processed and rebuilt, as well as the strength indicator of the received RSSI signal, are sent to the IBC transceiver module (3) towards the processor module (1) where it is accepted or discarded that the signal corresponds to a mounting, the criteria for such decision are the duration, integrity and strength of the signal. If the signal received corresponds to a mounting then the processor stores the event with the exact time and retransmits every mount with its characteristics (time, duration, intensity) and with the identification of the animal being mounted and the one doing the mounting, said transmission is made by means of the RF transceiver module (4).

During the mounting the RF transceiver module (4) of the animal doing the mounting (23) is activated as well as the RF transceiver module of the animal being mounted (24), This happens so as to allow RF communication between both animals and share information (25) such as ID, The IBC's RSSI, height and pressure. In those cases where two or more females receive the same IBC signal from the same animal doing the mounting, said event is communicated between them by means of the RF transceiver module (4), informing the ID and RSSI intensity of the IBC signal each animal is perceiving, in this way false alarms that could be caused by the contact of the hanging electros (10) with more than one animal during the same mounting, are discarded. RF communication between the animals during mounting also allow for validation that the height of the animal doing the mounting is greater than that of the animal being mounted, thus eliminating false alarms due to mistaken activation of the IBC signal.

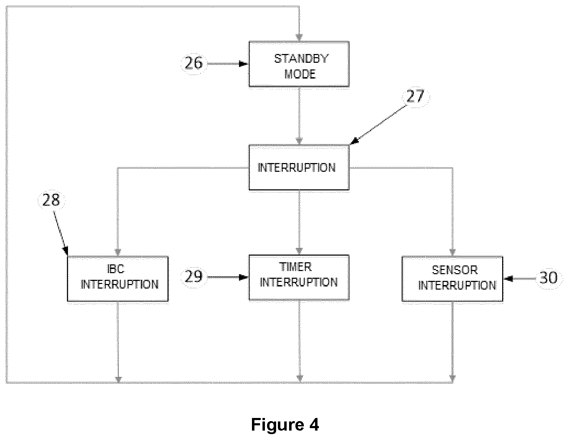

Figure 4 shows the schematic of how the standby mode (26) of the processor module (1) can be interrupted (27 by means of three different processes; IBC interruption (28) when the fixed electrode of the collar on a cow not laying down detects an IBC signal possibly coming from the collar of another animal. Timer interruption (29), when the measurements of the acceleration and pressure sensors is updated, and sensor interruption (30) in case that the sequence of events indicating a jump and mounting on another animal occurs, in other words characteristic changes in angles, acceleration and heights. In this way, the standby mode of the processor can be interrupted once an effective mount is detected, indicating that the cow has been mounted and is effectively in heat.

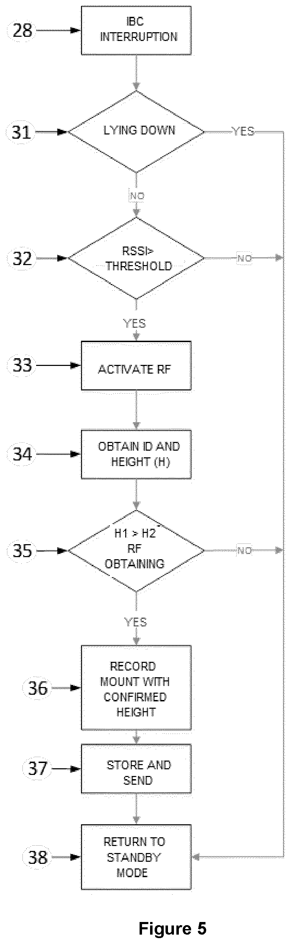

The process of interrupting the standby mode, by IBC interruption (28) is specified in figure 5. The first step of the method consists on evaluating whether the current state of the cow is laying down (31) with which the processor returns to standby mode (38). If the state is different, it is assessed (32) if the RSSI intensity level of the received IBC signal is greater than a set threshold, in which case the RF transceiver is activated (33), to obtain (34) the ID and height of the cow which is communicating via RF. Next the height of the cow being mounted (H1) is compared (35) with the height of the cow doing the mounting (H2), since if this height is lower, then there is an additional confirmation of the location of the animal doing the mounting, due to this reason a mounting with confirmed height (36) is registered and stored (37) and the data is sent vie RF through the link gate, or directly to the computer terminal. After this, the processor (1) returns again to the standby mode (38).

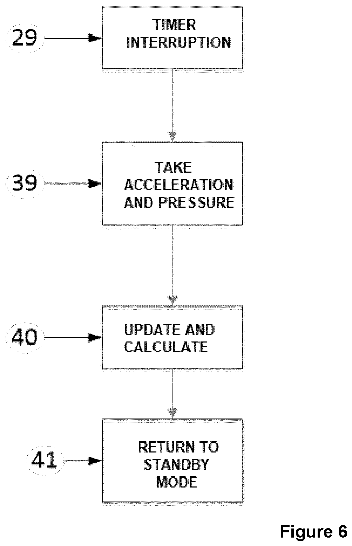

The process for timer interruption (29) is shown in figure 6. The process begins with taking the pressure and acceleration measurements (39), then the measurements for: height and atmospheric pressure, resting time, standing up or walking time, feeding time, head position and current state are updated and calculated (40), said updated information is sent to the inner memory (6) and the computer terminals (16). Once the previous data have been updated, it returns to standby mode (41).

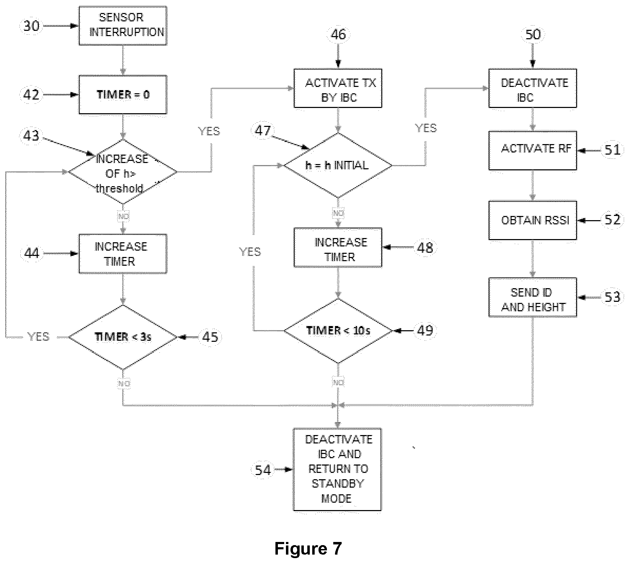

Figure 7 shows the process for interrupting the standby mode by sensor (30). The first step consists on setting an initial zero time (42), then it is evaluated if there has been an increment higher than the established threshold in the range of 50 cm to 200 cm (43) in the height of the animal, indicating a possible mounting. If there is no set increment, the timer is increased (44) and it is assessed (45) the time in comparison with a reference time To (for example 3 seconds), in which case the cycle is repeated and in the contrary it returns to standby mode (54). On the other hand, if an increase in the height higher to the established threshold (43) is detected, the IBC signal transmission is activated (46) and it is evaluated if the height returns to the initial value it had before the mounting (47). If the height is maintained with the established increment, there is a wait time (48) and it is assessed if this time is shorter than a reference time T₁ (for example 10 seconds) (49), after which the system deactivates the IBC transmission and returns to standby mode (54). In case the height returns to the initial height, the IBC signal emission is deactivated (50) and the RF emitter is activated (51), to connect via RF with nearby animals (52) and obtain from them the RSSI intensity level of the IBC signal. Once the module with the largest IBC is identified, it connects (53) via RF with it and sends the data of ID identification and height, to finally deactivate the IBC and return to standby mode (54).

It is deemed unnecessary to further extend this specification, for an expert in the mater to understand the scope and advantages of the invention. The materials, shape, size and arrangement of the elements will be susceptible to variations as long as it would no suppose an alteration of the essential aspect of the invention. Al the technical and scientific terms used herein have the same meaning as commonly understood by those skilled in the art. Every publication, patent application and patents and other references mentioned, are hereby incorporated as reference entirely.

### BIBLIOGRAPHIC REFERENCES

Callejas, S. Physiology of the bovine estrus cycle, pp 37-52. Biotechnology of Reproduction. INTA Editions, 1st edition. (2001*)*
*Department of contents of Infocarne.com* *http:*//*www.infocarne.com*/*bovino*/*manejo reproductivo ganado bovino.htm*
Dick, A. R. The importance of detecting estrus in artificial insemination of the dairy cattle. (2002*)*
Diskin, M. G. Reproductive management of dairy cows: A review (part I). Irish Veterinary Journal. Vol. 61, N°5, 329-332. (2008*)*
Lucy, M. C. Celo: Basic biology and improvement of detection. Taurus 11(43): 15-27. (2009*)*
Marcantonio, S. A. Detection or estrus. Reproduction. Ed Romage S. A., 1-48. (1998*).*
Callejon L. Maria. Contributions to characterization of human body as transmission medium in the intrabody communication techniques. Technical School of Engineering. University of Sevilla, (2016*).*

## Claims

1. A system for detecting mount through intrabody communications **characterized by** comprising a gateway 814), computing terminals and an electronic box (13) fastened to the neck of each animal through a collar (12) and which is comprised by:
a. a processor module (1) comprising a clock (5) and an internal memory (6);
b. a sensor module (2) which has at least one height sensor such as an atmosphere pressure sensor (7) and an acceleration sensor (8);
c. an IBC transceiver (3) formed by a fixed electrode (9) located on the body of the animal, and a hanging electrode (10) located on the collar (12) thereof;
d. a RF transceiver (4) connected to a RF antenna (11);
wherein the RF transceiver (4) wirelessly communicates to the computing terminals, and with other RF transceivers of other units in a direct manner or through a gateway (14).

2. A system for detecting mount through intrabody communications according to claim 1, **characterized in that** each collar (12) comprises a counterweight formed by a metal piece fastened to the lower part of the collar which keeps it in one position by the action of the weight exerted, which formed the ground or electric mass of the collar, or the hanging electrode, or both alternately.

3. A system for detecting mount through intrabody communications according to claim 1, **characterized in that** the electronic box (13) is a resistant box, installed on the collar (12) electrically interconnecting to the mass, to the fixed electrode and to the hanging electrode, wherein the fixed electrode may be housed inside this box or be part of it.

4. A system for detecting mount through intrabody communications according to claim 1, **characterized in that** the collar (12) comprises a fixed electrode (9) formed by a metal piece in firm contact with the neck of the animal wearing it, and a hanging electrode (10) consisting of a metal piece fastened hanging in the lower part of the collar, wherein the electrodes receive and transmit the electric signals induced through the body of the animal (18), which travel from and to the collar of another animal or from and to a gateway (14) or computing terminal (16).

5. A system for detecting mount through intrabody communications according to claim 1, **characterized in that** the height sensor can be selected from the group of: an ultrasound sensor, an infrared sensor, or a presence sensor.

6. A system for detecting mount through intrabody communications according to claim 1, **characterized in that** the communication between the gateway (14) and the computing terminals is made via wired and/or wireless (20) links or via some data connection to internet (15).

7. A system for detecting mount through intrabody communications according to claim 1, **characterized in that** the computing terminals correspond to a terminal equipment such as a Smartphone (17), PC (16) or server which communicates to the gateway (14) and/or directly to the electronic collars through a compatible wireless or wired interface (22).

8. Process for detecting mount through intrabody communications, consisting in the transmission of an electric signal through a communication over the body IBC initiated from the IBC transceiver module (3) of the collar of the animal mounting and transmitted until being received by the IBC transceiver module (3) of the collar of the animal being mounted, wherein the process is **characterized by** the following steps:
a. periodically determining the current mode of activity of the animal, distinguishing at least the modes of feeding, laying down, walking, head up and jumping over other animal;
b. storing and processing the information related to the time, animal identification, intensity of the IBC signal and duration, when a mount is produced;
c. calculating the atmosphere pressure and height with respect to the sea level and dynamically recalculating the average height of the standing or walking animal;
d. establishing the height threshold above which is considered that the animal could be jumping over a female in heat;
e. initiating the IBC communication;
f. retransmitting the information to the gateway (14) and the computing terminals (16) through the RF transceiver module (4).

9. Process for detecting mount through intrabody communications according to claim 8, **characterized in that** the step corresponding to the initiation of the IBC communication consists in generating an electric signal in the processor module (1) and amplifying it preferably with a power driver and a LC resonant circuit of the IBC transceiver module (3), said amplified signal being transmitted through the hanging electrode (10) in contact or close to the animal loin being mounted (24), wherein the signal (18) travels through the tissues of the animal being mounted (24) until reaching the neck thereof where the fixed electrode (9) of the collar of the animal receiving it and processing it preferably through a low consumption integrated circuit is located.

10. Process for detecting mount through intrabody communications according to claim 8, **characterized in that** when determining the current mode of activity of the animal, the standby mode (26) can be interrupted (27) through three different processes: IBC interruption (28), timer interruption (29) and sensor interruption (30).

11. Process for detecting mount through intrabody communications according to claim 10, **characterized in that** the process for interrupting the standby mode by IBC interruption (28) comprises the following steps:
a. evaluating if the current state of the cow is laying down (31);
b. evaluating (32) if the RSSI intensity level of the IBC signal received is greater than a predefined threshold, if the animal state is different to the laying down state, activating (33) the RF transceiver;
c. obtaining (34) the ID identification and height of the cow communicating via RF;
d. comparing (35) the height of the cow with the height of the cow communicating via RF;
e. recording a mount with height confirmation (36) if the height is less, or with no height confirmation if there is no fulfillment of the condition or no comparison was made;
f. storing (37) and sending the data via RF to the gateway (14) ro directly to the computing terminal; and
g. returning to standby mode.

12. Process for detecting mount through intrabody communications according to claim 10, **characterized in that** the process for timer interruption (29) comprises the following steps:
a. taking the height and acceleration measures (39);
b. updating and calculating (40) the measures of: height and atmosphere pressure, standby time, time standing or walking, time feeding, time lying down, head position and current state, periodically storing them and transmitting them;
c. returning to the standby mode (41).

13. Process for detecting mount through intrabody communications according to claim 10, **characterized in that** process for interrupting the standby mode by sensor (30), comprises the following steps:
a. establishing a zero initial time (42);
b. evaluating if there has been an increase greater than the established threshold in the range between 50 cm and 200 cm (43) in the average height of the animal standing, which indicates a possible mount;
c. increasing the timer (44) if there is no established increase;
d. evaluating (45) if the time is less than to a time T₀, in which case the cycle is repeated;
e. activating the IBC signal transmission (46), when an increase in the height is detected being greater than the threshold established in the range from 50 cm and 200 cm (43);
f. evaluating if the height returns to the initial value before jumping (47);
g. waiting a time (48) if the height maintains the established increase, and evaluating if the time is less than the preestablished time T₁ (49);
h. deactivating (50) the broadcast of the IBC signal, if the height returns to the initial height;
i. activating the RF transceiver (51);
j. connecting via RF with nearby animals (52) and obtaining from these the RSSI intensity level of the IBC signal;
k. connecting (53) via RF with the module of greatest IBC and sending the ID identification and height data;
l. deactivating the broadcast of the IBC signal and return to the standby mode (54).
